# EUROPÄISCHE PATENTSCHRIFT

(11) **EP 2 637 842 B1**
(45) Veröffentlichungstag und Bekanntmachung des Hinweises auf die Patenterteilung: **27.01.2016**
(21) Anmeldenummer: 11779679.7
(22) Anmeldetag: 09.11.2011
(51) Int. Cl.: B29C 70/46, B29B 11/16

(54) **VERFAHREN UND VORRICHTUNG ZUR HERSTELLUNG EINES DREIDIMENSIONALEN VORFORMLINGS IM ZUGE DER HERSTELLUNG VON FASERVERSTÄRKTEN FORMTEILEN**
METHOD AND DEVICE FOR PRODUCING A THREE-DIMENSIONAL PREFORM DURING THE PRODUCTION OF FIBER-REINFORCED MOLDED PARTS
PROCÉDÉ ET DISPOSITIF POUR LA FABRICATION D'UNE PRÉFORME TRIDIMENSIONNELLE DANS LE CADRE DE LA FABRICATION D'ÉLÉMENTS MOULÉS RENFORCÉS DE FIBRES

(30) Priorität: 09.11.2010 DE 102010043665
(43) Veröffentlichungstag der Anmeldung: 18.09.2013
(73) Patentinhaber: Dieffenbacher GmbH Maschinen- und Anlagenbau, 75031 Eppingen (DE)
(72) Erfinder: GRAF, Matthias, 75015 Bretten (DE); FUERST, Tobias, 76227 Karlsruhe (DE)
(86) Internationale Anmeldenummer: PCT/EP2011/069782
(87) Internationale Veröffentlichungsnummer: WO 2012/062825

(56) Entgegenhaltungen:
- DE-A1- 3 319 391
- DE-A1- 19 540 189

## Beschreibung

Die Erfindung betrifft ein Verfahren zur Herstellung eines dreidimensionalen Vorformlings im Zuge der Herstellung von faserverstärkten Formteilen nach dem Oberbegriff des Patentanspruchs 1 und eine Vorrichtung zur Herstellung eines dreidimensionalen Vorformlings im Zuge der Herstellung von faserverstärkten Formteilen nach dem Oberbegriff des Patentanspruchs 13.

Im Zuge der Herstellung von faserverstärkten Kunststoffbauteilen, auch Faserverbundbauteile genannt, ist insbesondere als industrielle Verwendung das Resin-Transfer-Moulding-Verfahren (im Folgenden kurz RTM-Verfahren genannt) gängige Praxis. Der gesamte Herstellungsprozess bis zum Erhalt eines verwendungsfähigen Kunststoffbauteiles besteht aus mehreren nacheinander ablaufenden Einzelprozessen: In einem ersten Verfahrensschritt werden Faserhalbzeuge hergestellt. In diesem Preform-Prozess werden in der Regel mehrschichtige Gewebe oder Fasergelege üblicherweise in 2D, also im Wesentlichen in einer Ebene, zusammengefügt, sodass das Faserhalbzeug im Wesentlichen bereits die notwendigen äußeren Konturen und teilweise auch bereits besondere Schichten oder Schichtdicken aufweist. Vorzugsweise wird ein Binder in die Trennebenen der Gelege eingebracht, der nach seiner Aktivierung und Aushärtung zu einer Fixierung der Schichten zueinander und der drapierten 3D-Kontur führt. Für den Preform-Prozess werden diese Schichten dann in ein Umformwerkzeug überführt und meist unter Druck durch Schließen des Umformwerkzeuges soweit der Kontur des späteren Formteiles angenähert und durch Aktivierung des Binders (Aufheizen und Abkühlen) ausgehärtet, sodass das Faserhalbzeug endkonturnah in ein Werkzeug einer Presse zur Durchführung des RTM-Verfahrens selbst eingelegt werden kann. Je nach Bedarf wird das Faserhalbzeug noch nachgeschnitten oder an vorgegebenen Stellen ausgestanzt, um eine noch präzisere Kontur zu erhalten. Nach dem Einlegen des Faserhalbzeugs in das Werkzeug werden die Werkzeughälften geschlossen und das notwendige Harz in die Kavität des Werkzeuges injiziert, wobei das Harz die Faserstruktur des Faserhalbzeuges imprägniert, die Fasern einschließt und fest in die Matrix einbindet. Nach dem Aushärten des Harzes kann das faserverstärkte Kunststoffbauteil entformt werden.

Neben dem RTM-Verfahren selbst, legt bereits die Herstellung eines Faserhalbzeuges den Grundstein für den Erfolg bei der Herstellung eines Kunststoffbauteiles. Es hat sich gezeigt, dass der Stand der Technik eine Vielzahl an Möglichkeiten zur Herstellung eines Vorformlings beschreibt, die sich aber in der Regel in der manuellen oder automatisierten Herstellung eines möglichst ebenen Fasergewebestapels erschöpfen, das in einer Presse schließlich aus seiner 2D-Form in eine 3D-Form überführt wird. Dies kann in einem vorfixiertem (z. B. genäht) oder noch in einem flexiblen Zustand durchgeführt werden. Das Ziel ist es nach der Formgebung einen Vorformling zu erhalten, der biegesteif genug ist, um vollständig automatisiert und prozesssicher in das Werkzeug einer RTM-Presse eingelegt werden zu können oder auch bis zur weiteren Verwendung transportiert und abgestapelt werden kann. Zur Herstellung, Umformung und Fixierung des Vorformlings gibt es eine Vielzahl an Möglichkeiten im einschlägigen Stand der Technik, wie beispielsweise EP 0 620 091 B1, DE 33 19 391 A1 oder DE 195 40 189 A1. Das in diesem Patent offenbarte Verfahren hat sich bewährt, zeigt aber eine Vielzahl an Verfahrensschritten um einen dreidimensionalen Vorformling herzustellen.

Die Aufgabe der Erfindung besteht darin, ein Verfahren und eine Vorrichtung anzugeben, mit dem gegenüber dem Stand der Technik schneller und einfacher aus zweidimensionalen Fasergewebestapeln dreidimensionale Vorformlinge hergestellt werden können. Weiter soll es möglich sein, hochkomplexe Vorformlinge mit einer deutlich besseren Präzision des umgeformten Fasergewebestapels herzustellen, was insbesondere die Faserorientierung und die Regelmäßigkeit des verwendeten Fasergewebestapels betrifft, sodass auch eine Faltenbildung ein Verzug erfolgreich verhindert werden kann. Vorzugsweise soll eine ursprünglich im Wesentlichen 2D-Form zu einem dreidimensionalen Vorformling zur Verwendung in einem RTM-Prozess umgeformt werden können.

Die Lösung der Aufgabe besteht für das Verfahren nach den Merkmalen des Anspruches 1 darin, dass ein Fasergewebestapel zwischen der Formschale und der Drapiervorrichtung platziert oder dort gebildet wird, dass anschließend zumindest ein Drapierwerkzeug aus der Drapiervorrichtung in Richtung der Formschale verfahren wird und dabei der Fasergewebestapel mit einem an der Seite des Fasergewebestapels angeordneten Formspitze des Drapierwerkzeuges mittels einer ersten Kontaktfläche zumindest teilweise in Richtung der Formschale bewegt wird, wobei sich während des Einbringens eine sich gleichbleibende oder vergrößernde zweite Kontaktfläche zwischen der Formspitze und dem Fasergewebestapel durch das Fließen des Fasergewebestapels ausbildet und dass nach Kontakt des Fasergewebestapels durch die Formspitze mit der Formschale sich eine dritte Kontaktfläche zwischen der Formspitze und dem Fasergewebestapels ausbildet, die größer ist als die zweite Kontaktfläche, wobei sich die dritte vergrößerte Kontaktfläche durch eine reversible Verformung der Formspitze und die damit einhergehende Einklemmung des Fasergewebestapels zwischen der Formspitze und der Formschale ergibt.

Vorzugsweise wird das Fließverhalten dabei so bemessen, dass Falten und/oder Risse während des Einbringens des Fasergewebestapels in die Formschale vermieden werden.

Insbesondere werden nach dem ersten Drapierwerkzeug die nachfolgenden Drapierwerkzeuge von dem ersten Drapierwerkzeug aus in Richtung der Außen- oder der Innenkontur ausgewählt, um ein Nachfließen von diesen Konturen, also den Seiten, zu ermöglichen.

Die Lösung der Aufgabe für die Vorrichtung besteht nach den Merkmalen des Anspruches 13 darin, dass an zumindest einem Drapierwerkzeug der Drapiervorrichtung in Richtung der Formschale eine Formspitze angeordnet ist, die sich bei Aufbau eines Anpressdruckes durch Kontakt des Fasergewebestapels mit der Formschale reversibel verformt.

Weiter wird eine Formschale zur Beheizung und/oder Kühlung eines Fasergewebestapels vorgeschlagen, wobei in der Formschale Mittel zur Einleitung von Heiß- und/oder Kaltluft in den Fasergewebestapel angeordnet sind. Alternativ oder kumulativ hierzu können in der Formschale als Temperaturelemente Peltierelemente zur Beheizung und/oder zur Kühlung des Fasergewebestapels und/oder der zuzuführenden Luft angeordnet sein.

In vorteilhafter Weise ist es nun möglich, mit dem erfindungsgemäßen Verfahren und einer hierzu geeigneten aber auch eigenständig verwendbaren Vorrichtung, an einen Vorformling angepasste Fasergewebestapel aus einem im Wesentlichen ebenem Zustand (2D) in eine dreidimensionale Form umzuformen und zu fixieren. Insbesondere ist von Vorteil, dass die Umformung schonend durchgeführt werden kann und Knicke, Falten und Stauchungen oder Verwerfungen des Fasergewebestapels während der Umformung vermieden werden können. Gleichwohl ist es auch möglich, komplexe Geometrien herzustellen, die mit den bisherigen aus dem Stand der Technik bekannten Ausführungsformen nur durch erhöhten maschinen- und anlagentechnischen Aufwand durchführbar waren und dazu auch noch einen höheren Zeitaufwand erforderten.

Das Verfahren und die Vorrichtung dienen zur 3D-Verformung von mehrlagigen 2D-Zuschnitten von Fasergeweben. Hierbei sind die folgenden Verfahrensschritte vorgesehen: Es werden Fasergewebe oder -gelege von einer Rolle abgewickelt und je nach Bedarf aus mehreren verschiedenen Geweben oder Gelegen, Formen und Größen zu einem Fasergewebestapel zusammengelegt. Dabei kann es notwendig sein, die Außen- und ggf. Innenkontur entsprechend einem Schnittmuster des Vorformlings respektive des Kunststoffformteils zu bearbeiten oder zuzuschneiden. Das Schnittmuster wird dabei aus einer Abwicklung des Vorformlings oder des Endbauteils erzeugt. Vorzugsweise wird dann der erstellte Fasergewebestapel auf dem Auflagetisch der Drapiervorrichtung abgelegt. Alternativ kann auch vorgesehen sein, den Fasergewebestapel aus einzelnen oder bereits vorkomponierten Fasergeweben direkt auf dem Auflagetisch herzustellen.

Zwischen die einzelnen Lagen wird ggf. ein Bindermaterial aufgestreut, aufgetragen oder eingesprüht. Anschließend wird die Formschale über den Fasergewebestapel geschwenkt oder verfahren. Es ist offensichtlich, dass die Einzelkinematik von Bauteilen wie der Formschale nicht im Vordergrund der erfindungsgemäßen Lösung steht, sondern eher das Gesamtkonzept, was das Einschwenken der oberen Formschale über den Fasergewebestapel bedingt. Natürlich könnten die beiden Hauptbauteile Drapiervorrichtung und Formschale auch zueinander im Abstand verfahrbar angeordnet sein. Anschließend werden die Drapierwerkzeuge von unten nach oben verfahren, um den Fasergewebestapel in die Formschale zu bewegen oder zu drücken. Vorzugsweise wird dies NC-gesteuert durchgeführt und weist eine auf den Fasergewebestapel bzw. die Formschale abgestimmte Reihenfolge und Geschwindigkeit der Drapierwerkzeuge auf.

Um Verschmutzungen oder ein Verziehen des Fasergewebestapels zu vermeiden oder um ein optimiertes Einformen des Fasergewebestapels in die Formschale zu gewährleisten, wäre es von Vorteil, zwischen dem Fasergewebestapel und dem Auflagetisch respektive den Drapierwerkzeugen ein Zwischenband vorzusehen. Das Zwischenband kann eine drapierfähige Textillage oder ein Kunststoffband sein, das sich vorzugsweise mit einer Zugvorrichtung über Umlenkrollen gespannt halten lässt, insbesondere während des Einbringens des Fasergewebestapels in die Formschale. Durch ein derartiges Zwischenband können größere Abstände zwischen den Drapierwerkzeugen ermöglicht werden. Dazu kommt, dass eventuell auftretende Relativbewegungen zwischen Fasergewebestapel und Drapierwerkzeugen beim Einfahren der Drapierwerkzeuge in die Formschale zwischen dem Zwischenband und den Drapierwerkzeugen stattfinden, sodass der Fasergewebestapel in sich selbst möglichst stabil bleibt.

Vor, während oder nach erfolgtem Schwenkvorgang der Drapiervorrichtung mit der Formschale kann die Formschale beheizt werden, um den Binder oder eine Harzschicht zum Verkleben innerhalb des Fasergewebestapels zu aktivieren. Bei Verwendung eines thermoplastischen Bindematerials wird beispielsweise zur Beheizung (Verflüssigung des Binders) auch noch anschließend gekühlt (Verfestigung des Binders). Bereits während einer Teilaushärtung des Fasergewebestapels können die Drapierwerkzeuge wieder in den Auflagetisch einfahren und die Drapiervorrichtung wird wieder zurück in eine Aufnahmeposition verschwenkt, damit der Auflagetisch einen neuen Fasergewebestapel aufnehmen kann. Während des Vorganges kann das Zwischenband je nach Anforderung entspannt werden. Nach Entnahme des Vorformlings aus der Formschale durch eine Hand oder einen Industrieroboter wird die Formschale ebenfalls wieder für den nächsten Umformvorgang in Richtung der Drapiervorrichtung verschwenkt. Und der nächste Umformvorgang kann beginnen.

Natürlich wäre es denkbar, die Formschale in das Gesamtkonzept der Anlage einzubinden und als Formenträger und als Zwischenlager während des Transports zu verwenden, wobei vorzugsweise mehrere Formschalen in der Anlage Verwendung finden.

In einer Erweiterung können für sehr komplexe Fasergewebestapel diese auf einem Auflagetisch einer in einer Aufnahmeposition stehenden Drapiervorrichtung platziert werden, wobei anschließend eine Formschale derart in eine Aufnahmeposition verfahren wird, dass sich der Fasergewebestapel zwischen dem Auflagetisch und der Formschale befindet, dass anschließend zumindest ein Drapierwerkzeug aus dem Auflagetisch im Wesentlichen entgegen der Gewichtskraft ausgefahren wird und dabei der Fasergewebestapel zumindest teilweise in die Formschale eingebracht wird, dass nach dem Einbringen in die Formschale die Drapiervorrichtung zusammen mit der Formschale um einen Schwenkwinkel α derart verschwenkt wird, dass das Fasergewebestapel aufgrund der Gewichtskraft in der Formschale verbleibt, dass anschließend die Drapiervorrichtung wieder in die Aufnahmeposition zur Aufnahme eines weiteren Fasergewebestapels verschwenkt wird und dass die Formschale der Drapiervorrichtung nach Entnahme oder Abgabe des zumindest teilweise ausgehärteten Vorformlings in die Aufnahmeposition verschwenkt wird.

Um die Umformung des Fasergewebestapels in eine Kavitäten aufweisende Formschale zu verbessern, sollten folgende Punkte dringend beachtet werden:
- es darf kein unzulässiger Zug auf den Fasergewebestapel gelangen, da sich sonst die Struktur (Faserorientierung und Regelmäßigkeit) verziehen könnte oder der Fasergewebestapel Risse bekommt.
- Es dürfen keine Faltenbildung oder Überwerfungen beim Drapieren des Fasergewebestapels in Bauteilvertiefungen entstehen.
- Nach Wunsch kann der Fasergewebestapel spannungsarm oder mit einer gezielt definierten Spannung fixiert werden.

Um dieses zu erreichen, wird der Fasergewebestapel flächig auf den Auflagetisch abgelegt. Ggf. ist eine zusätzliche Drapierunterlage z.B. in Form einer Zwischenfolie oder eines gespannten Textils zwischen den Drapierwerkzeugen und dem Fasergewebestapel notwendig, um eine gleitfreudige Unterlage zu schaffen.

Vorzugsweise fährt einer oder mehrere Fixierstempel aus und klemmt den Fasergewebestapel an der Stelle, wo keine Verschiebungen stattfinden sollen, wonach schließlich Drapierwerkzeuge aus Schaumstoff den Fasergewebestapel in die Vertiefungen drücken. Die Formspitzen aus Schaumstoffformteilen sind so beschaffen, dass an den seitlichen Wänden zur Formschale der Fasergewebestapel nicht geklemmt wird, sondern frei beweglich ist und beliebig von den Seiten nachgleiten kann. Nachdem die Drapierwerkzeuge auf dem Boden auftreffen, wird ein Anpressdruck aufgebaut und der ausreichend harte aber flexible Kunststoff verformt sich, wodurch dieser zur Seite ausweicht und somit auch das Gelege respektive den Fasergewebestapel gegen die Wandsektionen oder äquivalenten 3D-Konturen presst. In diesem Endzustand kann nun der Binder bereits mittels Temperatureinwirkung aktiviert und der Fasergewebestapel in der Formschale fixiert werden. Nach der Drehung oder einer Fixierung werden die Drapierwerkzeuge wieder zurückgezogen. Ggf. kann zur Vermeidung von Faserverschiebungen, vor dem Zurückziehen, der Schaumstoff durch Anlegen von Unterdruck oder Vakuum weiter geschrumpft werden. Dies bedingt natürlich eine geschlossene Schaumstoff-Oberfläche. Um das Fließverhalten des Fasergewebestapels während des Einbettens in die Formschale weiter zu verbessern, ist es auch denkbar, dass auf der Seite der Formschale an vorgegebenen Stellen, vorzugsweise Vertiefungen, Reibungsmittel oder beispielsweise einfach nur Schaumstoffe angeordnet sind. Kommt der Fasergewebestapel mit diesem in Kontakt, wird er dort geklemmt und das Flies- oder Rutschverhalten wird verringert oder ausgeschaltet. Über den Druck der korrespondierenden Fixierstempel oder Drapierwerkzeuge kann die Umformung genau gesteuert werden.

Je nach Komplexität des Bauteils können mit dem oben beschriebenen Grundkonzept einzelne Drapierschritte mit einzeln steuerbaren Drapierwerkzeugen und/oder Fixierstempeln schrittweise durchgeführt werden.

Mit einem Zwischenband aus Folie oder Textil können die sich ergebenden Relativbewegungen zwischen Drapierwerkzeug und Fasergewebestapel vom Fasergewebestapel ferngehalten und dadurch unerwünschte Faserverschiebungen vermieden werden. Hierzu wird das Zwischenband beispielsweise mit Zugvorrichtungen gezielt gespannt und entspannt. So kann, z. B. beim Zurückziehen der Drapierwerkzeuge, die Spannung verringert oder abgeschaltet werden, um Anpresskraft an den Umlenkstellen zu vermeiden. Die Formspitzen können schließlich als Schaumstoffformkörper über Unterdruck oder Vakuum oder auch entgegengesetzt mittels Druckluft in ihrer Form änderbar ausgeführt sein.

Es ergeben sich also hinsichtlich der Ansteuerbarkeit folgende Vorteile: Angepasst an die Umformkontur respektive die Formschale können die Drapierwerkzeuge oder die Fixierstempel in vorteilhafter und beliebiger Reihenfolge angesteuert werden, um von innen nach außen (zu den Randbereichen) den Fasergewebestapel zu drapieren und Verspannungen zu vermeiden. Hierzu kann mittels moderner Simulationsprogramme ein entsprechender Modus gefunden werden, der eine optimale Verschiebung oder Umformung von 2D-Schichten auf eine dreidimensionale Kontur ermöglicht. Vorzugsweise ist der Auflagetisch hierzu in Form einer Matrix mit Drapierwerkzeugen versehen, die wahlweise als Drapierwerkzeug oder Fixierstempel wirken können. In Verbindung mit flexiblen Schaumstoffformteilen als Formspitze an den Drapierwerkzeugen, vorzugsweise mit Untermaß gegenüber der Kontur, die sich erst nach stirnseitigem Kontakt mit der Vertiefung der Formschale nach außen verformen und den Fasergewebestapel an die Vertiefungswände anpressen, ergibt sich die Möglichkeit nahezu jede 3D-Kontur anzufahren.

Auch ist es möglich, für die Versteifung des Fasergewebestapels diesen zumindest teilweise mittels einzubringender Nähte zu fixieren. Dies ist insbesondere sinnvoll, wenn Einzellagen, Lagerpakete und/oder der Fasergewebestapel selbst entsprechend der Außen- und/oder der Innenkontur des Vorformlings gebildet und anschließend zugeschnitten wird.

Zur Fixierung ist es auch notwendig, dass zwischen zumindest zwei Schichten des Fasergewebestapels während des Zusammenlegens zumindest teilweise ein aushärtbares Bindemittel eingebracht wird, wobei dementsprechend der Fasergewebestapel aus zumindest zwei Schichten besteht und zusammengelegt wird. Vorzugsweise wird zumindest eine Schicht von einer Rolle abgeschnitten.

Um ein besseres Ergebnis bei der Umformung zu erzielen, wäre es von Vorteil als Zwischenband ein, vorzugsweise gleitfreudiges, Kunststoffband oder ein, vorzugsweise gleitfreudiges, Textiltuch zu verwenden.

Ein optionales Zwischenband kann zwischen dem Fasergewebestapel und der Formschale und/oder der Drapiervorrichtung angeordnet sein.

Eine Formschale weist vorzugsweise Mittel zur Einleitung von Heiß- und/oder Kaltluft in den Fasergewebestapel auf, die beispielsweise auch aus zumindest einem Peltierelement zur Beheizung und/oder zur Kühlung des Fasergewebestapels bestehen können.

In vorteilhafter Weise kann bei dem Verfahren durch die sich vergrößernde Kontaktfläche der Fasergewebestapel zumindest teilweise mehr an die Kontur der Formschale angedrückt werden, wobei das schonend und unter möglichen Nachzieheffekten für den Fasergewebestapel durchgeführt wird. Dabei kann sich die Formspitze im Wesentlichen bei Erweiterung von der ersten zur zweiten Kontaktfläche an die bei der Kontaktfläche vorliegende Kontur der Formschale anpassen. Vorzugsweise wird dabei eine Formspitze verwendet, die in ihrem Querschnitt auf Seite des Fasergewebestapels größer ausgeführt ist als auf der Seite der Drapiervorrichtung. Besonders bevorzugt wird die Formspitze als eine mittels Fluiden veränderbare Membrane ausgeführt. Alternativ, ggf. auch kumulativ, kann eine Formspitze anteilig aus Schaumstoff und ein gegenüber dem Schaumstoff härteres Material Verwendung finden.

Unter den Kontaktflächen versteht die Erfindung folgende Zusammenhänge: Eine erste Kontaktfläche bildet sich aus, wenn die Formspitze den Fasergewebestapel berührt. Die zweite Kontaktfläche bildet sich aus, wenn der Fasergewebestapel durch die Formspitze in Richtung der Formschale geschoben wird, wobei die Kontaktfläche sich unter Umständen während des Verschiebens vergrößern oder auch gleichbleiben kann. Nach Kontakt der Formspitze mit der Formschale und dazwischenliegendem Fasergewebestapel ergibt sich bei stärkerem Anpressdruck durch die Stellglieder die Konsequenz, dass die Formspitze verformt wird. Es bildet sich eine dritte Kontaktfläche aus, die nur durch die Verformung der Formspitze entsteht und größer oder gleich sein muss als die zweite Kontaktfläche vor dem Eintritt in die Verformungsphase.

Die Formspitze sollte im Wesentlichen die Geometrie der auszuformenden Bauteilkontur annehmen, wobei die unverformte Form der Formspitze, zumindest an den Seitenflächen (vom äußeren Ende in Richtung Drapiervorrichtung) im Querschnitt kleiner ausgeführt ist, damit beim Einfahren in Richtung Formschale der Fasergewebestapel nicht zwischen der Formspitze seitlich und der Formschale geklemmt wird. Die Formspitze sollte an den zur Formschale korrespondierenden Flächen kleinere Krümmungsradien aufweisen als die Formschale selbst. Bei zunehmendem Anpressdruck wird die Formspitze sich durch eine elastische und reversible Verformung teilweise oder nahezu vollständig an die Formschale anlegen und den Fasergewebestapel einklemmen. Die Formspitze kann als aufblasbare Membrane ausgeführt sein oder mit anderen Fluiden hinsichtlich ihrer elastischen Verformbarkeit einstellbar sein. Auch lässt sich damit der Anpressdruck und/oder sogar der Temperatureintrag in den Fasergewebestapel einstellen. Die Formspitze kann schließlich auch nur partiell aus Schaumstoff ausgeführt und der restliche Bereich aus einem gegenüber dem Schaumstoff härteren Werkstoff hergestellt sein.

Es wäre auch von Vorteil, wenn nach dem Setzen des ersten Drapierwerkzeugs die nachfolgend ausfahrenden Drapierwerkzeuge von dem Fixierpunkt der Reihe nach in Richtung Außen- oder der Innenkontur verwendet werden.

Vorzugsweise können die Stellglieder zum Verfahren der Drapierwerkzeuge als druck- oder wegsteuerbare Linearantrieb ausgeführt werden (Kolbenzylinderanordnungen oder Spindelantriebe).
Weitere vorteilhafte Maßnahmen und Ausgestaltungen des Gegenstandes der Erfindung gehen aus den Unteransprüchen, welche einzeln oder in Kombination miteinander einsetzbar sind, und der folgenden Beschreibung mit der Zeichnung hervor. Die folgenden Darstellungen sind nicht direkt als Einzelfalllösungen anzusehen, sondern enthalten in Teilen auch allgemeine Hinweise und Aufgabenlösungen.

Es zeigen schematisch:
- Figur 1: eine Vorrichtung zur Herstellung von Vorformlingen, bestehend aus einer Drapiervorrichtung mit einem Auflagetisch und einer zugehörigen Formschale in Aufnahmeposition, wobei der Fasergewebestapel bereits fertig ausgebildet auf dem Auflagetisch zur Umformung bereit liegt;
- Figur 2: die Umformung des Fasergewebestapels durch die Drapierwerkzeuge der Drapiervorrichtung nach Figur 1;
- Figur 3: das Verschwenken (um einen Schwenkwinkel α) der gesamten Vorrichtung (Drapiervorrichtung mit Formschale) um einen Rahmen aus der Aufnahmeposition in eine Aushärte- und/oder Ausgebeposition;
- Figur 4: das Zurückschwenken (um einen Schwenkwinkel α) der Drapiervorrichtung in die Aufnahmeposition zur Aufnahme eines neuen Fasergewebestapels, wobei ein Industrieroboter zur Aufnahme des Vorformlings aus der Formschale heraus und zur Weitergabe des Vorformlings an einen Stapel oder an eine Formpresse bereit steht;
- Figur 5: ein weiteres Ausführungsbeispiel mit einem Drehwinkel um die Drapiervorrichtung respektive die Formschale herum;
- Figur 6: eine Draufsicht auf einen Auflagetisch mit den beispielhaften Drapierwerkzeugen;
- Figur 7: eine vergrößerte schematische Schnittansicht durch den Auflagetisch der Drapiervorrichtung mit einem zusätzlichen Fixierstempel zwischen zwei Drapierwerkzeugen mit und einem noch ursprünglichen Fasergewebestapel in einer im Wesentlichen ebenen Grundform;
- Figur 8: die Drapiervorrichtung nach Figur 7 mit ausgefahrenen Drapierwerkzeugen und in Eingriff stehenden Drapierspitzen am tiefsten Bereich der Formschale;
- Figur 9: die Drapiervorrichtung nach Figur 8 mit ausgefahrenen Drapierwerkzeugen und verformten Drapierspitzen zur Aufbringung eines Anpressdruckes auch seitlich der Drapierspitzen in einer Vertiefung der Formschale;
- Figur 10: in einem weiteren Ausführungsbeispiel eine Drapiervorrichtung mit mittels Fluiden in ihrer Größe veränderbaren Drapierspitzen;
- Figur 11: eine nochmals vergrößerte Darstellung eines Drapierwerkzeuges und einer in einer Formschale korrespondierenden Vertiefung mit einem flexiblem Gegenlager der Formschale zur Fixierung des Fasergewebestapels in der Mitte der Vertiefung während des Einbringens des Fasergewebestapels in die Formschale;
- Figur 12: das beispielhafte Ergebnis nach dem Einbringen des Fasergewebestapels in die Formschale nach Figur 11; und die
- Figur 13: bis 15 zeigen ein Beispiel für eine variierte Ansteuerung mehrere Drapierwerkzeuge mit an die Formschale angepassten Formspitzen.

Die Figuren zeigen eine Vorrichtung, die auch zur Durchführung des Verfahrens geeignet ist, aber auch eigenständig ausgeführt und betrieben werden kann. Dabei bezeichnen gleiche Bezugszeichen gleiche oder vergleichbare Komponenten.

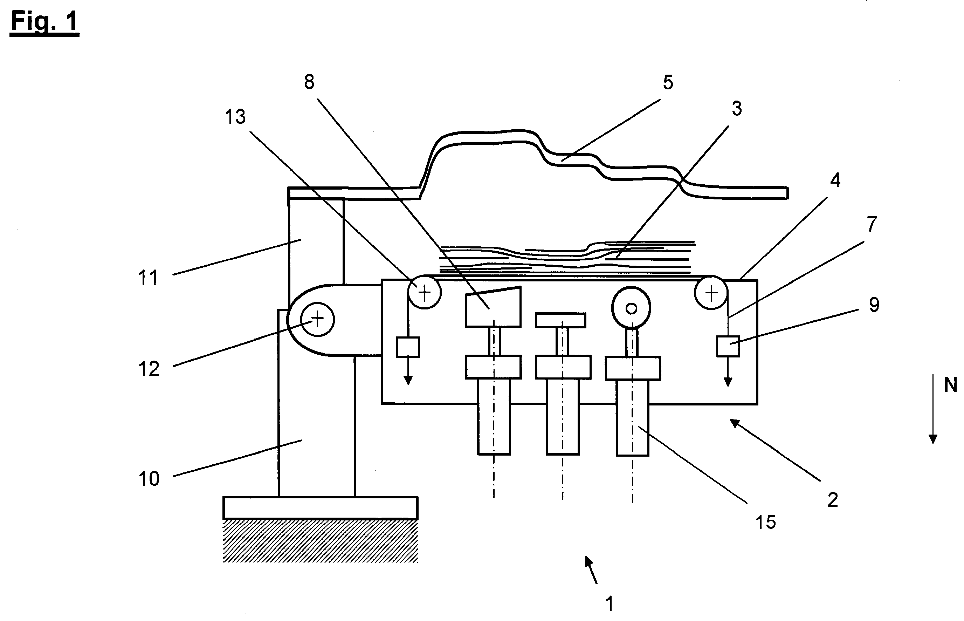

Eine beispielhafte Vorrichtung 1 zur Herstellung von Vorformlingen 6 besteht nach Figur 1 aus einer Drapiervorrichtung 2 mit einem Auflagetisch 4 und einer zugehörigen Formschale 5. In vorliegendem Fall liegt der Fasergewebestapel 3 bereits fertig ausgebildet auf dem Auflagetisch 4 zur Umformung bereit. Die Drapierwerkzeuge 8 sind dabei in einem eingefahrenen Zustand innerhalb respektive unterhalb des Auflagetisches 4, auf dem der Fasergewebestapel 3 aufgrund der Gewichtskraft N ruhig zu liegen kommt, dargestellt. In einer besonders vorteilhaften Variante befindet sich zwischen dem Fasergewebestapel 3 und dem Auflagetisch 4 ein Zwischenband 7. Das Zwischenband 7 hat hier die Aufgabe, zwischen den Drapierwerkzeugen 8 als verbindendes Krafteinbringelement für die Umformung des Fasergewebestapels 3 zu dienen und ist aus diesem Grund auch vorzugsweise über eine Zugvorrichtung 9 spannbar und beispielsweise über Umlenkrollen 13 geführt. Die Drapierwerkzeuge 8 in der Drapiervorrichtung 2 bestehen üblicherweise aus Linearförderern, hier Kolbenzylinderanordnungen 15, die es ermöglichen, die entsprechend der Kontur der Formschale 5 respektive entsprechend der Kontur des Vorformlings 6 angepassten Enden der Drapierwerkzeuge 8 in Richtung oder von der Formschale 5 weg zu bewegen. Auf Seiten des Fasergewebestapels 3 können die Drapierwerkzeuge 8 flexible Druckelemente, beispielsweise Schaumstoffe, aufweisen, die vorzugsweise abschnittsweise in ihrer Kontur an die Formschale 5 bzw. an den Bereich der Formschale 5, den es zu drapieren gilt, angepasst sind. In einer in späteren Figuren dargestellten Form weisen die Druckelemente spezielle Formen auf, die bei Druck durch die Kolbenzylinderanordnungen 15 ihre Form beim Anlegen an die Formschale 5 verändern. Die Drapiervorrichtung 2 ist vorzugsweise an einem mit dem Boden fest verbundenem Rahmen 10 über eine Schwenkachse 12 beweglich angeordnet. Auch die Formschale 5 weist eine Verbindung zur Schwenkachse 12 über eine Halterung 11 auf, so dass die Formschale 5 und die Drapiervorrichtung 2 um die Schwenkachse 12 synchron verschwenkbar angeordnet sind.

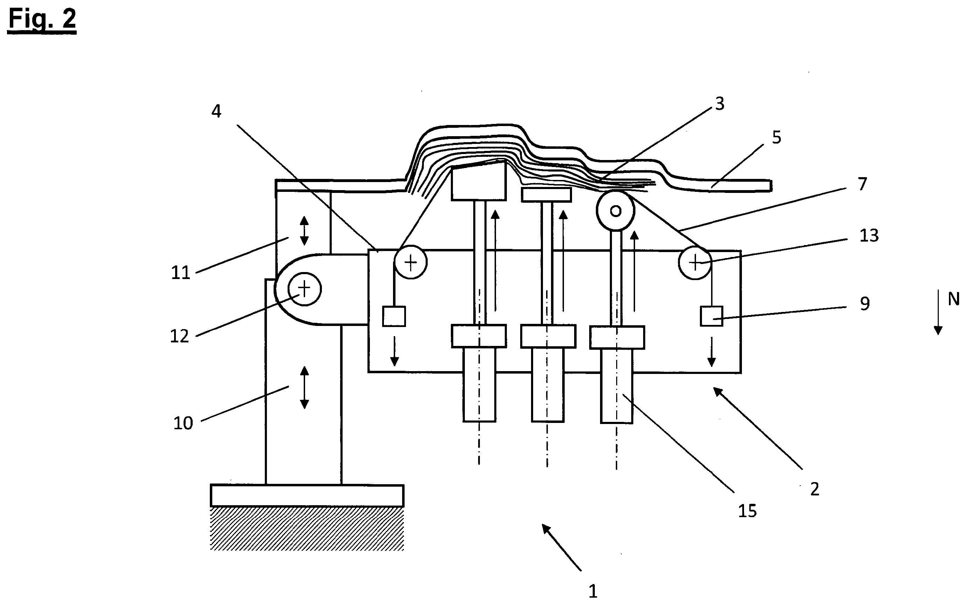

Ist nun der Fasergewebestapel 3 auf dem Auflagetisch 4 platziert und die Formschale 5 in Position, siehe Darstellung in Figur 2, werden die Drapierwerkzeuge 8 mittels der Kolbenzylinderanordnungen 15, vorzugsweise entgegen der Gewichtskraft N, aus dem Auflagetisch 4 ausgefahren und drücken den Fasergewebestapel 3 in die Formschale 5. Das optionale Zwischenband 7 überbrückt dabei eventuell vorhandene Abstände zwischen den einzelnen Drapierwerkzeugen 8 und sorgt auch für einen Rückhalt kleinster Fasergewebestapelanteile. Gleichzeitig ist das Zwischenband 7 sinnvoll aufgrund der Reinigungsproblematik. Das Zwischenband 7 kann aber auch im Sinne eines Förderbandes zum Transport des Fasergewebestapels 3 aus und in die Vorrichtung 1 respektive auf die Drapiervorrichtung 2 benutzt werden.

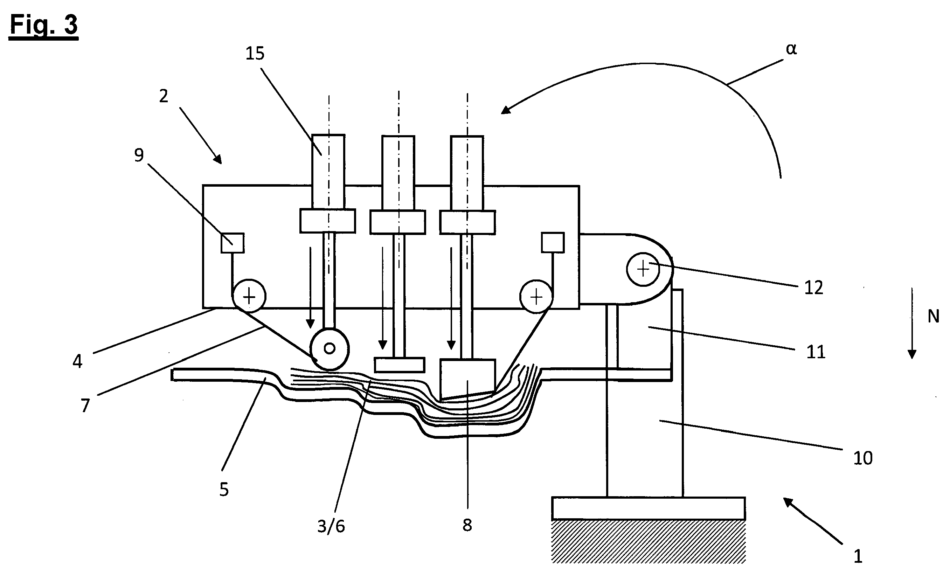

Ist der Fasergewebestapel 3 im Wesentlichen umgeformt und in die Formschale 5 eingebracht, wird nach Figur 3 das Verschwenken um einen Schwenkwinkel α der gesamten Vorrichtung 1 (Drapiervorrichtung 2 mit Formschale 5) um den Rahmen 10, respektive die Schwenkachse 12, aus der Aufnahmeposition in eine Aushärte- und/oder Ausgebeposition durchgeführt. In vorteilhafter Weise ist der Fasergewebestapel 3 immer noch in der Formschale 5 durch die Drapiervorrichtung 2 fixiert, wodurch während des Schwenkvorganges das Aushärten des vorhandenen Binders teilweise oder vollständig durchgeführt werden kann. Alternativ wäre auch denkbar, dass die Drapiervorrichtung 2 nach Erreichen einer Position der Formschale 5, in der der Fasergewebestapel 3 ordentlich drapiert liegt und durch die Gewichtskraft N selbsttätig an seiner Position gehalten wird, bereits wieder beginnt in Richtung Aufnahmeposition zurück zu schwenken. Die Aushärtung kann dann auch durch externe in die belegte Formschale 5 einfahrende Heizeinrichtungen oder Verschweiß- respektive Vernäheinrichtungen durchgeführt werden (nicht dargestellt). Auch ist nur eine partielle Aushärtung in der Formschale 5 denkbar.

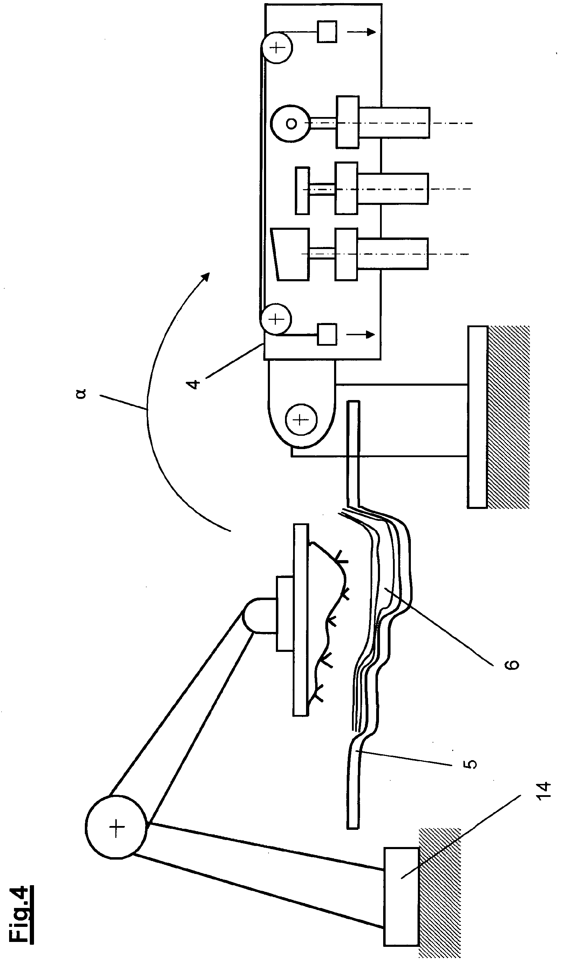

Durch das Zurückschwenken, beispielsweise nur des Auflagetisches 4, der Drapiervorrichtung 2 um einen Schwenkwinkel α in die Aufnahmeposition nach Figur 4 zur Aufnahme eines neuen Fasergewebestapels 3 zur Durchführung der vorherigen Verfahrensschritte wird Platz an dem Vorformling 6 frei, sodass ein Industrieroboter 14 zur Aufnahme des Vorformlings 6 aus der Formschale 5 heranfahren kann, der zur Weitergabe des Vorformlings 6 an einen Stapel oder an eine Formpresse bereit steht (nicht dargestellt).

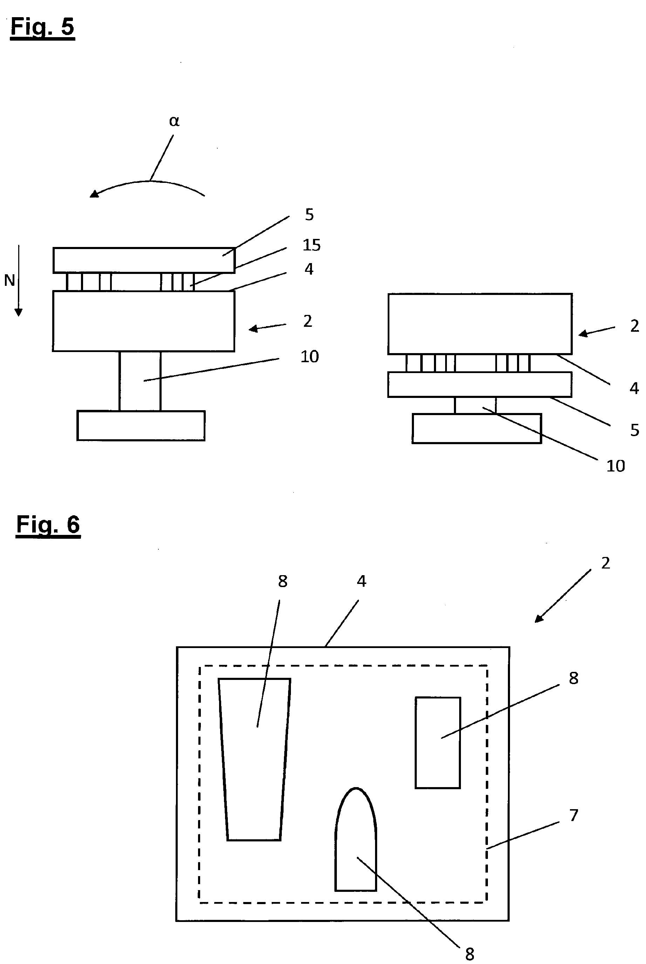

Figur 5 zeigt ein weiteres Ausführungsbeispiel in einem Vorher-Nachher-Vergleich, wie mit einem Drehwinkel α eine Drehung durchgeführt wird, so dass nach der Drapierung (Figur 5 links) mit der Formschale 5 oben die Formschale 5 um 180° gedreht ist und nun unterhalb des Auflagetisches 4 liegt, wobei während der Drehung die Drapierwerkzeuge 8 ausgefahren den Fasergewebestapel 3 in der Formschale 5 fixiert halten, bis dieser durch die Gewichtskraft N alleine zu liegen kommt (Figur 5 rechts). Dies kann je nach Platzbedarf oder anlagentechnischen Anforderungen eine mögliche Variante darstellen. Auch ist es denkbar, dass nicht nur eine Formschale 5 für eine Drapiervorrichtung 2 eingesetzt wird, sondern mehrere, die gleichzeitig als Lager- oder als Transportschalen dienen. Es hat sich gezeigt, dass ein Schwenken oder Drehen um 180° die vorteilhafteste Lösung darstellt, wobei es Anwendungsfälle geben mag, die auch einen geringeren Schwenkwinkel α bedingen können. Hervorzuheben wäre natürlich, dass nach dem Schwenken die Gewichtskraft N den Fasergewebestapel 3 nicht mehr auf die Drapiervorrichtung 2, beziehungsweise deren Auflagetisch 4, drückt, sondern in die Formschale 5.

Auch wenn die in den Figuren 1 bis 5 angedachte Variante die derart einfachste und unkomplizierteste erscheint, vermag es zum Beispiel bei höherer Produktionsgeschwindigkeit nötig sein, mehrere Formschalen 5 zu verwenden, die sich mit der Aufnahme eines Fasergewebestapels 3 zur partiellen oder vollständigen Aushärtung abwechseln. Die Formschalen 5 könnten auch als einzeln bewegbare Trägerschalen vorgesehen sein, die in eine separate Aushärtevorrichtung fahren, um die Aushärtung fertigzustellen oder auch gleich als Träger bis zur Übergabe in eine Formpresse zur Durchführung des RTM-Verfahrens verwendet werden. Die Fixierung kann nicht nur durch eine Beheizung der Formschalen 5 und ggf. auch durch eine Kühlung derselben erfolgen, sondern es sind auch andere übliche Beheizungen des Fasergewebestapels 3 oder ein Zusammenheften des Fasergewebestapels 3 an neuralgischen Punkten denkbar. Wird auf ein Zwischenband 7 verzichtet, ist bevorzugt vorgesehen, dass die an den Auflagetisch 4 angrenzende Schicht (eines Gewebes oder Geleges) des Fasergewebestapels 3 im Wesentlichen flächig und durchgehend ausgeführt wird. Zwischen zumindest zwei Schichten des Fasergewebestapels 3 kann während des Zusammenlegens oder bereits davor zumindest teilweise ein aushärtbares Bindemittel eingebracht werden.

Hinsichtlich des Drapierens wäre noch anzuführen, dass bei mehreren Drapierwerkzeugen 8 diese in vorgegebener Reihenfolge aus dem Auflagetisch 4 ausgefahren werden können, um ein Zerreißen oder zu starkes Verspannen des Fasergewebestapels 3 zu vermeiden. Auch können hierdurch unnötige Falten oder dergleichen vermieden werden.

Figur 6 zeigt eine Draufsicht auf einen Auflagetisch 4 mit einer möglichen Variante an Drapierwerkzeugen 8 und dem optionalen strichliert dargestellten Zwischenband 7.

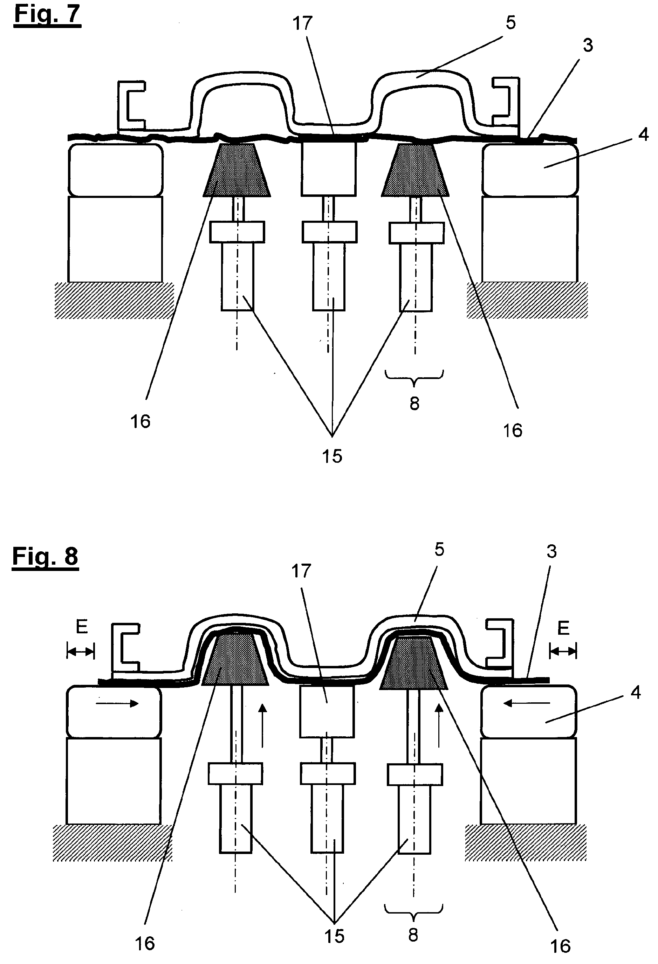

Figur 7 zeigt unabhängig von einer ggf. stattfindenden Drehung der Drapiervorrichtung Möglichkeiten zur verbesserten Umformung von Fasergewebestapeln 3 in eine Formschale 5. Dies kann bevorzugt von unten nach oben (entgegen der Gewichtskraft N), aber auch von oben nach unten (mit der Gewichtskraft N) durchgeführt werden, wobei in letzterem Falle das optionale Zwischenband 7 zur Durchführung des Drapierens sehr empfohlen wird, damit der Fasergewebestapel 3 nicht unkontrolliert in die Vertiefungen respektive in die Kontur der Formschale 5 hinein rutscht. In vorliegenden Beispielen der folgenden Figuren 7 bis 15 wurde auf die Darstellung des optionalen Zwischenbandes 7 verzichtet. Wie bereits ausgeführt, soll während des Drapierprozesses ein, vorzugsweise Karbon umfassender, Fasergelegestapel 3 in eine 3D Kontur verbracht werden. Hierbei soll kein unzulässiger Zug auf den Fasergewebestapel 3 gelangen, da sonst die Struktur (Faserorientierung und Regelmäßigkeit) verzogen werden könnte. Ferner soll eine Faltenbildung verhindert werden. Beim Drapieren des Fasergewebestapels 3 in die Formschale 5 ist es daher wichtig, dass Teile des Fasergewebestapels nahezu zugspannungsfrei nachfließen können.

Bevorzugt wird dabei von einem festen Punkt ausgegangen, der beispielsweise an einer Ebene liegen kann, die dem Auflagetisch 4 am nächsten liegt oder im Gegenteil kann zuerst mit einer tieferen Kontur der Formschale 5 begonnen werden, was ggf. am meisten Nachzieheffekte bei dem Fasergewebestapel 3 hervorrufen wird. Ist der Fasergewebestapel 3, wie in Figur 7 dargestellt, an einer Stelle fixiert, in vorliegender Figur 7 mittig mit einem Fixierstempel 17, folgen in vorgegebener Reihenfolge, vorzugsweise benachbarte, Drapierwerkzeuge 8 nach. Die Drapierwerkzeuge 8 können Formspitzen 16 aufweisen, die flexible Eigenschaften aufweisen und vorzugsweise aus Schaumstoffformteilen bestehen.

Nach Figur 8 drücken nun die Drapierwerkzeuge 8 mit den Formspitzen 16 einen Teil des Fasergewebestapels 3 in die Vertiefung der Formschale 5. Die Formspitzen 16 sind vorzugsweise als Schaumstoffformteile so beschaffen, dass an den seitlichen Wänden der Formschale 5 der Fasergewebestapel 3 während des Einfahrens in die Kontur nicht geklemmt wird, sondern frei gleiten kann. Damit werden Teile des Fasergewebestapels 3 links und rechts (ggf. auch zusätzlich vorderhalb und hinterhalb der Zeichenebene) in die Kontur eingezogen. Die eingezogenen Bereiche des Fasergewebestapels 3 werden am Rand des Auflagetisches 4 sichtbar und sind in Ihrer Länge mit einem E und in Ihrer Einzugsrichtung mit Pfeilen gekennzeichnet.

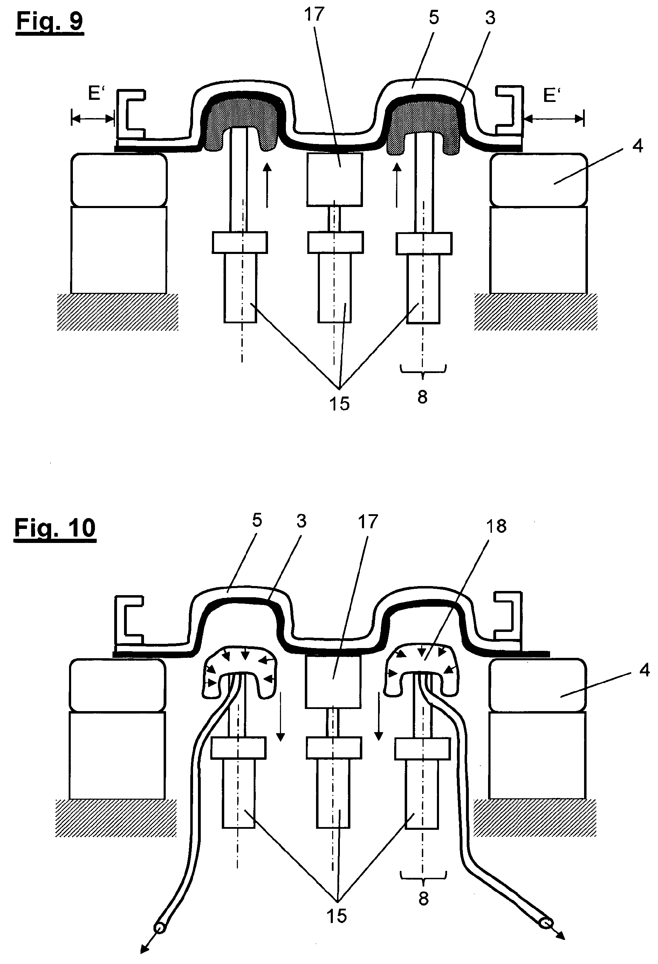

In Figur 9 zeigt sich der Vorteil von flexiblen Formspitzen 16 der Drapierwerkzeuge 8. Wenn die Drapierwerkzeuge 8 auf dem Boden der Kontur der Formschale 5 auftreffen, wird ein Anpressdruck über die Kolbenzylinderanordnungen 15 aufgebaut und die Formspitze 16 verformt sich, wodurch sie zur Seite ausweicht und somit auch den Fasergewebestapels 3 gegen die Wandsektionen oder sonstige 3D Konturen der Formschale 5 presst. In diesem Endzustand wird nun der Fasergewebestapel 3 gehalten und beispielsweise ein Binder aktiviert. Bei bestimmten Bauteilen kann es ausreichend sein, den somit entstehenden Vorformling 6 einfach zu entformen, die Formschale 5 nach oben wegzufahren und den Vorformling 6 aus der Drapiervorrichtung 2 zu entnehmen. Der Fixierstempel 17 könnte hierzu als Anhebevorrichtung oder Auswerfer dienen. Die Rotation der Drapiervorrichtung 2 könnte beispielsweise auch ohne die Formschale 5 stattfinden und als "Auswerfen" des Vorformlings 6 verwendet werden.

Diese Vorgänge sind teilweise in Figur 10 dargestellt, wobei hierbei in einer erweiterten vorteilhaften Ausführungsform die Formspitze 18 eine besondere Qualität aufweist. Diese kann zum Beispiel durch Anlegen von Unterdruck geschrumpft werden, um beim Ausfahren aus der Kontur der Formschale 5 nicht den umgeformten Fasergewebestapel 3 zu beschädigen. Anhand dieser Möglichkeit wäre es auch denkbar, Hinterschnitte mit dem Fasergelege 3 auszuformen, wobei für diesen Zweck die Formschale 5 entsprechend mehrteilig ausgeführt sein müsste.

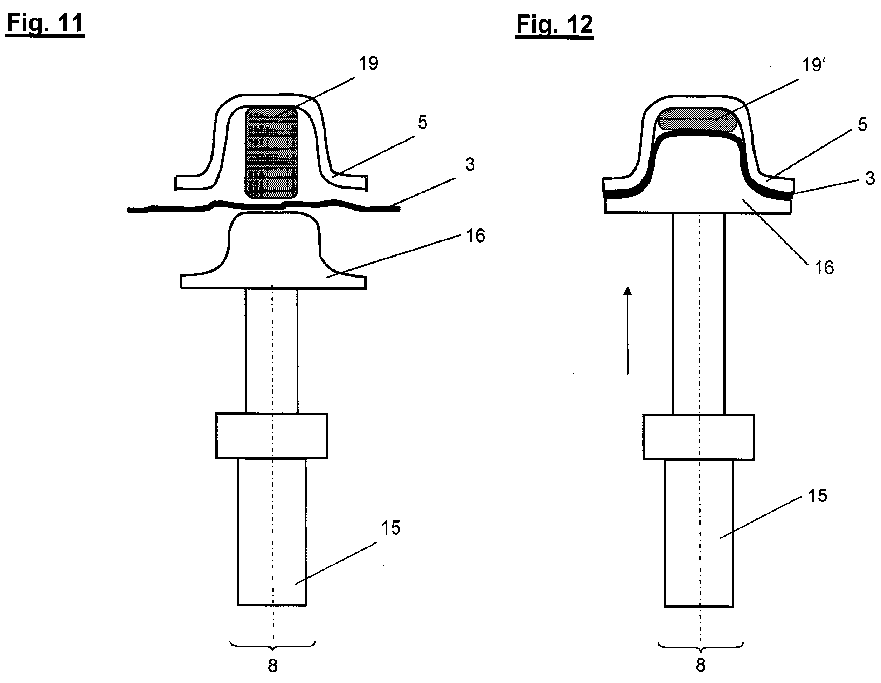

Die Figuren 11 und 12 zeigen zusätzliche Alternativen bei der Umformung mittels einer Formschale 5, bei denen ein Schaumstoff als Gegenlager 19 in eine Vertiefung der Formschale 5 eingebettet wird. Dies ist sinnvoll, wenn der Fixpunkt in der Vertiefung liegen soll. Damit entsteht beim Einfahren der Formspitze 16 bereits ein Gegendruck, der verhindert, dass der Fasergewebestapel 3 sich an dieser Stelle unkontrolliert verschiebt. Das Gegenlager 19 wird quasi als nachgiebiges Element der Formschale 5 angesehen. Es ergibt sich auch hier der Umstand, dass durch die Fixierung an der zuerst in Kontakt tretenden Stelle des Fasergewebestapels 3, dieses gezwungen wird, in die Kontur der Formschale 5 oder dem Teilbereich der Kontur nachzufließen, da auch hier die Konturränder der Formschale 5 erst gegen Ende des Ausfahrvorganges des Drapierwerkzeuges 8 in Kontakt mit der Formspitze 16 treten. Das Gegenlager 19' wird dabei so ausgelegt, dass es in entspannter Form (beim Eintritt des Drapierwerkzeuges 8 in die Formschale 5) genug Gegendruck zur Fixierung des Fasergewebestapels 3 während des Einfahrens aufbringen kann, aber spätestens bei Ende des Einfahrens nicht zu viel Druck auf den Fasergewebestapel 3 aufbringt, sodass dieser nicht beschädigt wird.

Je nach Komplexität des Bauteils (Formschale 5, Vorformling 6, Faserverbundwerkstoff 3), können mit dem oben beschriebenen Grundkonzept einzelne Drapierschritte mit einzeln steuerbaren Drapierwerkzeugen 8 schrittweise durchgeführt werden. Mit einem Zwischenband 7 (Folie und/oder Textil) können die sich ergebenden Relativbewegungen zwischen Drapierwerkzeug 8 und Fasergewebestapel 3 vom Fasergewebestapel 3 ferngehalten und dadurch Risse oder Verschiebungen innerhalb des Fasergewebestapels 3 vermieden werden. Das Zwischenband 7 kann mit einer Zugvorrichtung 9 gezielt gespannt und entspannt werden. So kann z.B. beim Zurückziehen der Drapierwerkzeuge 8 die Spannung abgeschaltet werden, um Anpresskraft an den Umlenkstellen zu vermeiden.

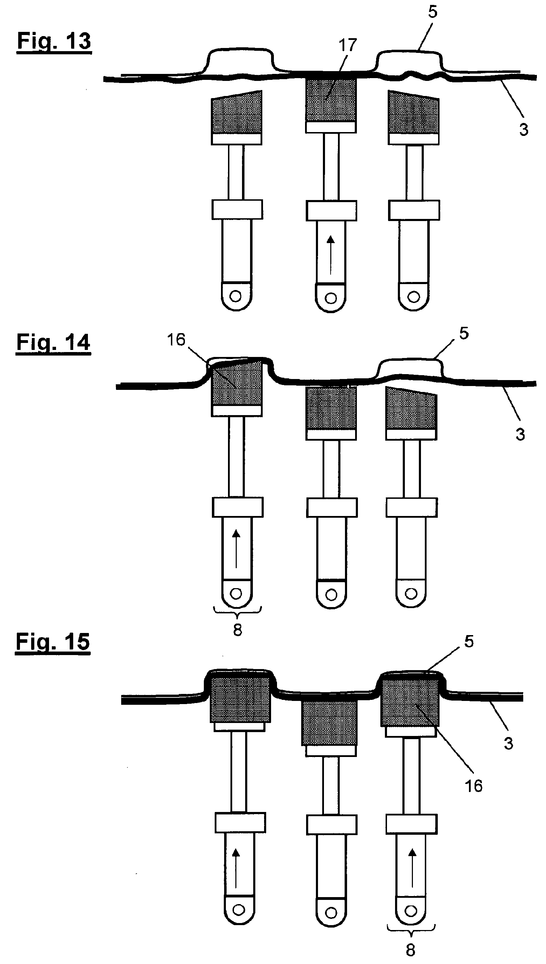

In den Figuren 13 bis 15 wird nochmal ein beispielhafter Ablauf eines vorteilhaften Umformens eines Fasergewebestapels 3 dargestellt, insbesondere mit variierender und abfolgender Aktivierung der Drapierwerkzeuge 8. Nach Figur 13 wird mittig der Fasergewebestapel 3 fixiert, indem der mittige Fixierstempel 17 ausfährt und den Fasergewebestapel 3 gegen die Formschale 5 drückt. Dies kann aber beispielsweise auch bei einer Vertiefung in der Kontur durchgeführt werden. Anschließend fährt in Figur 14 das linke Drapierwerkzeug 8 in die Kontur der Formschale 5 ein, sodass der Fasergewebestapel 3 in die linke Kontur gedrückt wird. Durch die asymmetrische Ausgestaltung der Formspitze 16 kann der Fasergewebestapel 3 von links nach rechts nachfließen, bis der Kontakt zwischen der Formspitze 16 (linkes Werkzeug, rechte Seite) und der Formschale 5 eintritt. Anschließend wird das gleiche mit dem rechten Drapierwerkzeug 8 durchgeführt (Figur 15) und schließlich wird der Druck durch die Stellglieder so stark, dass sich die Formspitzen 16 verformen und den Fasergewebestapel 3 auch an den Rändern gegen die Formschale 5 drücken. Somit ist nach Ende des Umformens die Kontur der Formschale 5 so stark wie möglich und auch so stark wie nötig nachgeformt.

Die Figuren 13ff. zeigen, dass die Drapierwerkzeuge 8 in vorteilhafter Reihenfolge gesteuert werden sollten, vorzugsweise von innen nach außen, um den Fasergewebestapel 3 zu drapieren und Verspannungen zu vermeiden.

Verwendung von Schaumstoffformteilen als Drapierwerkzeug 8, die Verwendung von Schaumstoffformteilen als Formspitzen 16 mit Untermaß, die erst nach stirnseitigem Kontakt zur Formschale 5, sich nach außen verformen und den Fasergewebestapel 3 anpressen, sind in vorteilhafter Weise anzuwenden.

### Bezugszeichenliste

- 1.: Vorrichtung
- 2.: Drapiervorrichtung
- 3.: Fasergewebestapel
- 4.: Auflagetisch
- 5.: Formschale
- 6.: Vorformling
- 7.: Zwischenband
- 8.: Drapierwerkzeug
- 9.: Zugvorrichtung
- 10.: Rahmen
- 11.: Halterung
- 12.: Schwenkachse
- 13.: Umlenkrolle
- 14.: Industrieroboter
- 15.: Kolbenzylinderanordnung
- 16.: Formspitze
- 17.: Fixierstempel
- 18.: Formspitze evakuierbar
- 19.: Gegenlager in 5

- α: Schwenkwinkel
- N: Gewichtskraft
- E: Einzug von 3
- E': Gesamteinzug von 3

## Patentansprüche

1. Verfahren zur Herstellung eines dreidimensionalen Vorformlings im Zuge der Herstellung von faserverstärkten Formteilen, wobei das Verfahren mit einer Vorrichtung (1) ausgeführt wird, die zumindest umfasst eine Drapiervorrichtung (2) für einen Fasergewebestapel (3) und eine Formschale (5) zur Ausbildung des Vorformlings (6) aus dem Fasergewebestapel (3) mittels der Drapiervorrichtung (2),
wobei ein Fasergewebestapel (3) zwischen der Formschale (5) und der Drapiervorrichtung (2) platziert oder dort gebildet wird; wobei anschließend zumindest ein Drapierwerkzeug (8) aus der Drapiervorrichtung (2) in Richtung der Formschale (5) verfahren wird und dabei der Fasergewebestapel (3) mit einem an der Seite des Fasergewebestapels (3) angeordneten Formspitze (16) des Drapierwerkzeuges (8) mittels einer ersten Kontaktfläche zumindest teilweise in Richtung der Formschale (5) bewegt wird,
wobei sich während des Einbringens eine sich gleichbleibende oder vergrößernde zweite Kontaktfläche zwischen der Formspitze (16) und dem Fasergewebestapel (3) durch das Fließen des Fasergewebestapels ausbildet; wobei nach Kontakt des Fasergewebestapels (3) durch die Formspitze (16) mit der Formschale (5) sich eine dritte Kontaktfläche zwischen der Formspitze (16) und dem Fasergewebestapels (3) ausbildet, die größer ist als die zweite Kontaktfläche, wobei sich die dritte vergrößerte Kontaktfläche durch eine reversible Verformung der Formspitze (16) und die damit einhergehende Einklemmung des Fasergewebestapels (3) zwischen der Formspitze (16) und der Formschale (5) ergibt und wobei die Größe und/oder die Verformbarkeit der Formspitze (16) mittels eines differenzierten Fluiddruckes innerhalb der Formspitze (16) veränderlich ist.

2. Verfahren nach Anspruch 1, **dadurch gekennzeichnet, dass** durch die sich vergrößernde Kontaktfläche der Fasergewebestapel (3) zumindest teilweise mehr an die Kontur der Formschale (5) angedrückt wird.

3. Verfahren nach Anspruch 1 oder 2, **dadurch**
**gekennzeichnet, dass** die Anpresskraft zur Ausbildung der zweiten Kontaktfläche durch die Stellglieder gegenüber der Kraft zum Transport des Fasergewebestapels (3) und/oder gegenüber der Kraft zur Ausbildung der ersten Kontaktfläche größer ist.

4. Verfahren nach einem oder mehreren der vorhergehenden Ansprüche, **dadurch gekennzeichnet, dass** sich die Formspitze (16) im Wesentlichen bei Erweiterung von der ersten zur zweiten Kontaktfläche an die bei der Kontaktfläche vorliegende Kontur der Formschale (5) anpasst.

5. Verfahren nach einem oder mehreren der vorhergehenden Ansprüche, **dadurch gekennzeichnet, dass** eine Formspitze (16) verwendet wird, die in ihrem Querschnitt auf Seite des Fasergewebestapels (3) größer ausgeführt ist als auf der Seite der Drapiervorrichtung (2).

6. Verfahren nach einem oder mehreren der vorhergehenden Ansprüche, **dadurch gekennzeichnet, dass** als Formspitze (16) eine mittels Fluiden veränderbare Membrane verwendet wird.

7. Verfahren nach einem oder mehreren der vorhergehenden Ansprüche, **dadurch gekennzeichnet, dass** als Formspitzen (16) anteilig ein Schaumstoff und ein gegenüber dem Schaumstoff härteres Material verwendet wird.

8. Verfahren nach einem oder mehreren der vorhergehenden Ansprüche, **dadurch gekennzeichnet, dass** zur Versteifung des Fasergewebestapels (3) in der Formschale (5) ein Binder in dem Fasergewebestapel (3) in der Formschale (5) zumindest teilweise ausgehärtet wird und/oder der Fasergewebestapel (3) mittels einzubringender Nähte fixiert wird.

9. Verfahren nach einem oder mehreren der vorhergehenden Ansprüche, **dadurch gekennzeichnet, dass** die Formschale (5) und/oder der Fasergewebestapel (3) selbst zur Aushärtung des Binders oder bei Verwendung eines thermoplastischen Binders zum Aufschmelzen beheizt und falls notwendig anschließend gekühlt wird.

10. Verfahren nach einem oder mehreren der vorhergehenden Ansprüche, **dadurch gekennzeichnet, dass** zwischen dem Fasergewebestapel (3) und der Formschale (5) und/oder der Drapiervorrichtung (2) ein Zwischenband (7) angeordnet wird.

11. Verfahren nach einem oder mehreren der vorhergehenden Ansprüche, **dadurch gekennzeichnet, dass** bei mehreren Drapierwerkzeuge (8) diese in vorgegebener Reihenfolge aus dem Auflagetisch (4) ausgefahren werden.

12. Verfahren nach einem oder mehreren der vorhergehenden Ansprüche, **dadurch gekennzeichnet, dass** die Formschalen (5) als Lager- und/oder Transportschalen für die Vorformlinge (6) verwendet werden.

13. Vorrichtung (1) zur Herstellung eines dreidimensionalen Vorformlings (6) im Zuge der Herstellung von faserverstärkten Formteilen, wobei die Vorrichtung (1) zumindest eine Drapiervorrichtung (2) für einen Fasergewebestapel (3) und eine Formschale (5) zur Ausbildung des Vorformlings (6) aus dem Fasergewebestapel (3) mittels der Drapiervorrichtung (2) umfasst, **dadurch gekennzeichnet, dass** an zumindest einem Drapierwerkzeug (8) der Drapiervorrichtung (2) in Richtung der Formschale (5) eine Formspitze (16) angeordnet ist, die sich bei Aufbau eines Anpressdruckes durch Kontakt des Fasergewebestapels (3) mit der Formschale (5) reversibel verformt und dass weiterhin eine Vorrichtung zur Einstellung der Größe und/oder der Verformbarkeit der Formspitze (16) mittels eines differenzierten Fluiddruckes angeordnet ist.

14. Vorrichtung (1) nach Anspruch 13, **dadurch gekennzeichnet, dass** als Formspitze (16) ein Schaumstoffformteil angeordnet ist.

15. Vorrichtung (1) nach Anspruch 13, **dadurch gekennzeichnet, dass** die Formspitze (16) als Membran ausgeführt ist.

## Claims

1. A method for producing a three-dimensional preform during production of fibre-reinforced moulded parts, wherein the method is carried out by an apparatus (1) which at least comprises a draping apparatus (2) for a fibre fabric stack (3) and a shell mould (5) for forming the preform (6) from the fibre fabric stack (3) by means of the draping apparatus (2), wherein a fibre fabric stack (3) is placed between the shell mould (5) and the draping apparatus (2) or is formed there, wherein subsequently at least one draping tool (8) is moved from the draping apparatus (2) in the direction of the shell mould (5) and the fibre fabric stack (3) is moved at least partly in the direction of the shell mould (5) by means of a first contact surface with a moulding tip (16) of the draping tool (8), said moulding tip being arranged on the side of the fibre fabric stack (3), wherein a constant or enlarging second contact surface is formed during the introduction between the moulding tip (16) and the fibre fabric stack (3) by the flowing of the fibre fabric stack, wherein a third contact surface forms between the moulding tip (16) and the fibre fabric stack (3) after contact of the fibre fabric stack (3) by the moulding tip (16) with the shell mould (5), said third contact surface being greater than the second contact surface, wherein the third enlarged contact surface is produced by a reversible deformation of the moulding tip (16) and the resulting clamping of the fibre fabric stack (3) between the moulding tip (16) and the shell mould (5), and wherein the size and/or the deformability of the moulding tip (16) is variable by means of a differentiated fluid pressure within the moulding tip (16).

2. A method according to claim 1, **characterized in that** as a result of the enlarging contact surface the fibre fabric stack (3) is pressed at least partly more against the contour of the shell mould (5).

3. A method according to claim 1 or 2, **characterized in that** the pressing force for forming the second contact surface by the actuators is greater in comparison with the force for the transport of the fibre fabric stack (3), and/or in comparison with the force for forming the first contact surface.

4. A method according to one or several of the preceding claims, **characterized in that** the moulding tip (16) adjusts to the contour of the shell mould (5) present in the contact surface substantially during the expansion from the first to the second contact surface.

5. A method according to one or several of the preceding claims, **characterized in that** a moulding tip (16) is used which is formed greater in its cross-section on the side of the fibre fabric stack (3) than on the side of the draping apparatus (2).

6. A method according to one or several of the preceding claims, **characterized in that** a membrane variable by means of fluids is used as a moulding tip (16).

7. A method according to one or several of the preceding claims, **characterized in that** a foamed material is proportionally used as the moulding tip (16) and a material which is harder in comparison with the foamed material.

8. A method according to one or several of the preceding claims, **characterized in that** for stiffening the fibre fabric stack (3) in the shell mould (5) a binder is cured at least partly in the fibre fabric stack (3) in the shell mould (5) and/or the fibre fabric stack (3) is fixed by means of seams to be introduced.

9. A method according to one or several of the preceding claims, **characterized in that** the shell mould (5) and/or the fibre fabric stack (3) itself is heated for curing the binder or for melting when using a thermoplastic binder, and is subsequently cooled if necessary.

10. A method according to one or several of the preceding claims, **characterized in that** an intermediate band (7) is arranged between the fibre fabric stack (3) and the shell mould (5) and/or the draping apparatus (2).

11. A method according to one or several of the preceding claims, **characterized in that** in the case of several draping tools (8) they are moved out of the supporting table (4) in a predetermined sequence.

12. A method according to one or several of the preceding claims, **characterized in that** the shell moulds (5) are used as support and/or transport shells for the preforms (6).

13. An apparatus (1) for producing a three-dimensional preform (6) during production of fibre-reinforced moulded parts, wherein the apparatus (1) comprises at least one draping apparatus (2) for a fibre fabric stack (3) and a shell mould (5) for forming the preform (6) from the fibre fabric stack (3) by means of the draping apparatus (2), **characterized in that** a moulding tip (16) is arranged on at least one draping tool (8) of the draping apparatus (2) in the direction of the shell mould (5), said moulding tip deforming reversibly upon build-up of a pressing pressure by contact of the fibre fabric stack (3) with the shell mould (5), and further an apparatus is arranged for setting the size and/or the deformability of the moulding tip (16) by means of a differentiated fluid pressure.

14. An apparatus (1) according to claim 13, **characterized in that** a foamed-material moulded part is arranged as a moulding tip (16).

15. An apparatus (1) according to claim 13, **characterized in that** the moulding tip (16) is formed as a membrane.

## Revendications

1. Procédé pour la fabrication d'une préforme en trois dimensions au cours de la fabrication de pièces moulées armées de fibres, lequel procédé est exécuté à l'aide d'un dispositif (1) qui comporte au moins un dispositif de drapage (2) pour un tas de tissu en fibres (3) et une coque de moule (5) pour la formation de la préforme (6) à partir du tas de tissu en fibres (3) au moyen du dispositif de drapage (2), dans lequel un tas de tissu en fibres (3) est placé ou formé entre la coque de moule (5) et le dispositif de drapage (2) ; dans lequel au moins un outil de drapage (8) est ensuite déplacé du dispositif de drapage (2) vers la coque de moule (5) et le tas de tissu en fibres (3) est alors déplacé au moins partiellement en direction de la coque de moule (5) avec une pointe de formage (16) de l'outil de drapage (8) disposée du côté du tas de tissu en fibres (3) au moyen d'une première surface de contact ; dans lequel, pendant l'introduction, une deuxième surface de contact qui reste constante ou s'agrandit se forme entre la pointe de formage (16) et le tas de tissu en fibres (3) par l'écoulement du tas de tissu en fibres ; dans lequel, après que la pointe de formage (16) a mis le tas de tissu en fibres (3) en contact avec la coque de moule (5), une troisième surface de contact plus grande que la deuxième surface de contact se forme entre la pointe de formage (16) et le tas de tissu en fibres (3), la troisième surface de contact agrandie étant obtenue par une déformation réversible de la pointe de formage (16) et le serrage en résultant du tas de tissu en fibres (3) entre la pointe de formage (16) et la coque de moule (5), et dans lequel la taille et/ou la déformabilité de la pointe de formage (16) peuvent être modifiées au moyen d'une pression de fluide différenciée à l'intérieur de la pointe de formage (16).

2. Procédé selon la revendication 1, **caractérisé en ce que** la surface de contact du tas de tissu en fibres (3) qui va en s'agrandissant est au moins en partie pressée davantage sur le contour de la coque de moule (5).

3. Procédé selon la revendication 1 ou 2, **caractérisé en ce que** la force de pressage pour former la deuxième surface de contact exercée par les organes d'actionnement est plus grande que la force nécessaire au transport du tas de tissu en fibres (3) et/ou que la force nécessaire pour former la première surface de contact.

4. Procédé selon une ou plusieurs des revendications précédentes, **caractérisé en ce que** la pointe de formage (16) s'adapte pour l'essentiel avec un élargissement de la première à la deuxième surface de contact au contour de la coque de moule (5) qui se présente au niveau de la surface de contact.

5. Procédé selon une ou plusieurs des revendications précédentes, **caractérisé en ce que** la pointe de formage (16) utilisée est plus grande en section du côté du tas de tissu en fibres (3) que du côté du dispositif de drapage (2).

6. Procédé selon une ou plusieurs des revendications précédentes, **caractérisé en ce que** la pointe de formage (16) utilisée est une membrane pouvant être modifiée au moyen de fluides.

7. Procédé selon une ou plusieurs des revendications précédentes, **caractérisé en ce que** la pointe de formage (16) est faite en partie d'une mousse et en partie d'un matériau plus dur que la mousse.

8. Procédé selon une ou plusieurs des revendications précédentes, **caractérisé en ce qu'**afin de raidir le tas de tissu en fibres (3) dans la coque de moule (5), un liant est durci au moins partiellement dans le tas de tissu en fibres (3) dans la coque de moule (5) et/ou le tas de tissu en fibres (3) est fixé au moyen de coutures mises en place.

9. Procédé selon une ou plusieurs des revendications précédentes, **caractérisé en ce que** la coque de moule (5) et/ou le tas de tissu en fibres (3) lui-même sont chauffés pour durcir le liant ou, si un liant thermoplastique est utilisé, pour le faire fondre, et refroidis ensuite si nécessaire.

10. Procédé selon une ou plusieurs des revendications précédentes, **caractérisé en ce qu'**une bande intercalaire (7) est disposée entre le tas de tissu en fibres (3) et la coque de moule (5) et/ou le dispositif de drapage (2).

11. Procédé selon une ou plusieurs des revendications précédentes, **caractérisé en ce que** lorsqu'il y a plusieurs outils de drapage (8), ceux-ci sont sortis du plateau d'appui (4) dans un ordre prédéterminé.

12. Procédé selon une ou plusieurs des revendications précédentes, **caractérisé en ce que** les coques de moule (5) sont utilisées comme coques de support et/ou de transport pour les préformes (6).

13. Dispositif (1) pour la fabrication d'une préforme (6) en trois dimensions au cours de la fabrication de pièces moulées armées de fibres, lequel dispositif (1) comprend au moins un dispositif de drapage (2) pour un tas de tissu en fibres (3) et une coque de moule (5) pour la formation de la préforme (6) à partir du tas de tissu en fibres (3) au moyen du dispositif de drapage (2), **caractérisé en ce qu'**est disposée sur au moins un outil de drapage (8) du dispositif de drapage (2) en direction de la coque de moule (5) une pointe de formage (16) qui se déforme de façon réversible par contact avec le tas de tissu en fibres (3) avec la coque de moule (5) lorsqu'une pression de pressage se constitue et **en ce qu'**il est prévu un dispositif pour régler la taille et/ou la déformabilité de la pointe de formage (16) au moyen d'une pression de fluide différenciée.

14. Dispositif (1) selon la revendication 13, **caractérisé en ce que** la pointe de formage (16) est une pièce moulée en mousse.

15. Dispositif (1) selon la revendication 13, **caractérisé en ce que** la pointe de formage (16) est réalisée comme une membrane.
